# EUROPEAN PATENT SPECIFICATION

(11) **EP 3 325 294 B1**
(45) Date of publication and mention of the grant of the patent: **25.05.2022**
(21) Application number: 16741348.3
(22) Date of filing: 22.07.2016
(51) Int. Cl.: B60H 1/00, B60H 1/32

(54) **VEHICLE AIR CONDITIONER AND METHOD FOR HEATING A VEHICLE INNER SPACE USING SUCH A VEHICLE AIR CONDITIONER**
FAHRZEUGKLIMAANLAGE UND VERFAHREN ZUM ERWÄRMEN EINES FAHRZEUGINNENRAUMS MIT SOLCH EINER FAHRZEUGKLIMAANLAGE
CLIMATISEUR DE VÉHICULE ET PROCÉDÉ POUR CHAUFFER UN ESPACE INTÉRIEUR DE VÉHICULE EN UTILISANT UN TEL CLIMATISEUR DE VÉHICULE

(30) Priority: 24.07.2015 DE 102015112123
(43) Date of publication of application: 30.05.2018
(73) Proprietor: Valeo Klimasysteme GmbH, 96476 Bad Rodach (DE)
(72) Inventor: HAUSSMANN, Roland, 96476 Bad Rodach (DE); SONNENBERGER, Rainer, 96476 Bad Rodach (DE)
(74) Representative: Valeo Systèmes Thermiques
(86) International application number: PCT/EP2016/067572
(87) International publication number: WO 2017/017029

(56) References cited:
- EP-A1- 2 072 298
- EP-A1- 2 679 419
- WO-A1-2013/105201
- JP-A- S62 152 918
- JP-B2- 5 240 564
- KR-A- 20080 054 943
- US-A- 5 725 048
- US-A1- 2014 224 448
- US-A1- 2015 082 820

## Description

The invention relates to a vehicle air conditioner for heating, ventilation and/or air-conditioning of a vehicle inner space as described in claim 1.

Vehicle air conditioners according to the preamble of claim 1 are already generally known from the prior art, wherein in heating mode, that is to say, at low outside temperatures, exclusively fresh air is generally supplied to these air conditioners in order to prevent misting of the vehicle windows as a result of this relatively dry air. However, this also means that warm and relatively damp air has to be discharged from the vehicle inner space to the environment, which leads to considerable heat losses and an undesirably high energy requirement in order to heat the vehicle inner space.

US 2012/0011869 A1 of the generic type discloses a vehicle air conditioning unit having a structural unit for recovering thermal energy from the waste air directed from the vehicle inner space into the vehicle environment. This separate heat recovery unit is generally accommodated in the rear of the vehicle and has an additional evaporator and a separate fan. Furthermore, additional refrigerant lines are required in order to connect the heat recovery unit to the refrigerant circuit of the vehicle air conditioning unit. Consequently, the construction of the proposed vehicle air conditioning unit is complex and expensive.

KR20080054943A discloses a fan system for removing bad smell of an air conditioner of a vehicle is provided to prevent propagation of bacteria by removing moisture generated in an evaporator during the operation of the air conditioner. A fan system for removing bad smell of an air conditioner of a vehicle comprises a blower for blowing external air into an interior of the vehicle, an evaporator for cooling the external air through heat exchange, a heater core, and an air mix valve. An air discharge hole is formed in a duct positioned between the heater core and the evaporator to discharge air to the atmosphere. A door valve is provided to open/close the discharge hole. A moisture detection sensor is provided to detect moisture generated from the evaporator. An electronic control unit drives the blower according to the signal of the moisture detection sensor.

JPS62152918A discloses an air conditioning device in which a humidity sensor is actuated when an evaporator is dried after completion of normal operation, with an ignition switch turned OFF. When humidity is increased to higher than a given value, an amplifier starts an actuator, and a motor starts a blower fan. As a result, when air sucked through either of intake ports is fed, a damper is actuated by the actuator through a link mechanism, an exhaust port is opened, and a communicating part is closed. Thus, after air fed in the case flows through an evaporator to dry the evaporator, the air is exhausted through the exhaust port to the outside.

WO2013105201A1 discloses a vehicle air conditioner provided with: a first heat exchanger for exchanging heat between a pressure-reduced refrigerant and ambient air; a second heat exchanger for exchanging heat between a compressed refrigerant and ambient air; a flow passage for leading air that has passed through the first heat exchanger to the vehicle interior; a flow passage for leading air that has passed through the second heat exchanger to the vehicle interior; a first blower which, when either of the aforementioned two flow passages is designated as a first flow passage and the other is designated as a second flow passage, is positioned in the middle of the first flow passage and circulates air to the first flow passage; and a switching valve that is capable of sending air from the second flow passage to the air intake side of the first blower in the first flow passage.

US5725048A discloses a process for cooling drive components and heating the passenger compartment of a motor vehicle, in which the air extracted from the passenger compartment comprises a proportion of exhaust air and one of recirculated air, where the recirculated air is heated in the heat exchanger for the cooling circuit of the drive system and taken to the passenger compartment.

EP2679419A1 discloses a vehicle air conditioner including: an external air introduction port for introducing external air into a vehicle interior; and a duct having an inlet port for drawing internal air into the duct and an outlet port for blowing air into the vehicle interior. In the duct, a first indoor heat exchanger and a second indoor heat exchanger of a heat pump circuit are disposed. The first indoor heat exchanger contributes mainly to heating, and the second indoor heat exchanger contributes mainly to cooling. The duct is provided with at least one of a heating exhaust port for discharging air cooled in the second indoor heat exchanger to the outside of the vehicle interior in heating operation and a cooling exhaust port for discharging air heated in the first indoor heat exchanger to the outside of the vehicle interior in cooling operation. With the above configuration, energy required for adjustment of the temperature of air in the vehicle interior can be efficiently used without waste.

US2015082820A1 discloses an vehicle air conditioner including a duct in which a partition member forming a first flow path and a second flow path is provided, and a heat pump circuit. In the heat pump circuit, a first indoor heat exchanger that contributes mainly to heating is located in the first flow path or faces an outlet of the first flow path, and a second indoor heat exchanger that contributes mainly to cooling is located in the second flow path. The ratio between an internal air and an external air within air flowing through each of the first flow path and the second flow path is adjustable. The duct is provided with at least one of a heating exhaust port for discharging air cooled in the second indoor heat exchanger to the outside of the vehicle interior in heating operation, and a cooling exhaust port for discharging air heated in the first indoor heat exchanger to the outside of the vehicle interior in cooling operation. This configuration enables the air within the vehicle interior, the temperature of which has been adjusted by heating or cooling, to be efficiently utilized without wasting energy by discharging the air as it is to the outside.

JP5240564B2 discloses an air-conditioning system for vehicle having: a duct for air-conditioning; the heater core housed in the duct for air-conditioning, and circulating a coolant of an engine; and a heating duct for partitioning the duct for air-conditioning so as to surround the heater core, is equipped with: an open air introduction port for introducing the open air into the duct for air-conditioning; an exhaust port for discharging the open air to outside a vehicle introduced from the open air introduction port to the duct for air-conditioning; and an opening and closing means for opening and closing the open air introduction port, the heating duct, and the exhaust port. The air-conditioning system for vehicle can be switched to a mode wherein the open air introduction port, the heating duct, and the exhaust port are maintained in an opening state, and the open air from the open air introduction port is led to the exhaust port through the heater core of the heating duct.

EP2072298A1 discloses a heat-pump cooler having a first circulation channel and a heater circulator having a second circulation channel. A water-cooling condenser in the first circulation channel is placed in the second circulation channel, and causes the first coolant to release its heat to the second coolant. The second circulation channel includes a passage switching valve for switching the passage between a passage passing a radiator and a radiator bypass passage. During a heating operation, the passage switching valve causes the second coolant to flow into the radiator bypass passage, and the air heated by a heater core is introduced as air-conditioned air into the vehicle cabin. During a cooling operation, the passage switching valve causes the second coolant to flow into the radiator, and the air cooled by an evaporator is introduced as air-conditioned air into the vehicle cabin.

US2014224448A1 discloses an HVAC airbox system with a cooling door that can be selectively positioned such that at least some of the air moving through the heater core is directed to the underhood area of a vehicle thereby providing supplemental engine cooling on demand regardless of the passenger's cabin heating and cooling requirements. The cooling door can be positioned automatically by the Engine Control Unit ("ECU") dependent on any parameter, or combination of parameters, of the engine such as the engine coolant temperature or the engine oil temperature. The blower speed and the position of the cooling door are adjusted by the ECU depending on the whether and how much supplemental engine cooling is required.

An object of the invention is therefore to provide a structurally simplified air conditioner which enables particularly energy-efficient heating of a vehicle inner space.

According to the invention, this object is achieved with a vehicle air conditioner according to claim 1.

Further, the vehicle air conditioner comprises an evaporator for cooling air and in the heating mode of the vehicle air conditioner at least a portion of the waste air which is discharged via the waste air duct flows through the evaporator.

As a result of this integration of the waste air duct in the vehicle air conditioner, the evaporator which is already present can be used to recover thermal energy from the waste air which flows into the vehicle environment. In this manner, it is consequently possible to recover energy from the warm waste air with minimal additional structural complexity. Only the waste air duct which is conventionally provided in the rear of the vehicle has to be integrated in the vehicle air conditioner which is usually provided in the vehicle front.

According to an embodiment of the vehicle air conditioner, a sensor for detecting an air humidity in the vehicle inner space and an electronic control unit for controlling a supply of fresh air to the vehicle inner space in accordance with data detected by the sensor can beprovided. In the heating mode of the vehicle air conditioner a fresh air proportion of the air supplied to the vehicle inner space can thereby be reduced and a circulation air proportion can be increased, which leads to a further increase of the energy efficiency. In particular, the proportion of the dry fresh air supplied to the vehicle inner space can in this instance be reduced to such an extent that a condensation of water on the vehicle windows is still prevented.

According to another embodiment of the vehicle air conditioner, a blower for conveying fresh air and circulation air is provided. This blower conveys fresh air and/or circulation air into the vehicle inner space, but can if required also discharge air into the vehicle environment via the waste air duct.

Furthermore, a control flap for adjusting a fresh air/circulation air or mixed air operation of the vehicle air conditioner may be provided, wherein the blower in fresh air operation conveys fresh air and in circulation air operation it conveys circulation air and in mixed air operation it conveys both fresh air and circulation air. In this manner, circulation air can also be at least partially used to heat the vehicle inner space in the heating mode of the vehicle air conditioner. The maximum circulation air proportion is achieved as soon as the vehicle windows mist, wherein, in order to monitor the window misting, a corresponding sensor for detecting an air humidity in the vehicle inner space is preferably provided.

With regard to energy-efficient operation of the vehicle air conditioner in the heating mode, a conventional pure fresh air operation without heat recovery from the waste air may be considered to be the worst. In contrast, pure fresh air operation with heat recovery of the waste air is already considerably more energy-efficient. With regard to the energy efficiency, a pure air circulation operation would be preferable, but the air humidity increases significantly in this instance and leads to an undesirable window misting in the vehicle inner space. Accordingly, a compromise which has been found to be particularly practical is a mixed air operation with heat recovery from the waste air, wherein the proportion of the (dry) fresh air supplied to the vehicle inner space is adjusted to be as low as possible, in particular so low that window misting in the vehicle inner space is still just prevented.

The blower of the vehicle air conditioner is arranged, for example, downstream of the evaporator.

Preferably, the vehicle air conditioner comprises a first condenser for heating air, and the evaporator is arranged with respect to an air flow direction produced by the blower upstream of the first condenser. According to the invention, two evaporator flaps are provided for adjusting an air flow direction inside the evaporator. In this instance, in the heating mode of the vehicle air conditioner, the evaporator may be flowed through in a first direction and in the cooling mode of the vehicle air conditioner may be flowed through in a second direction counter to the first direction.

With respect to an air flow direction produced by the blower, an electrical heating device, in particular a PTC heating device, may be provided downstream of the first condenser. This electrical heating device enables more rapid heating of the vehicle inner space, in particular with electric or hybrid vehicles.

According to a not claimed preferred embodiment, the vehicle air conditioner has precisely one evaporator. In particular, no separate heat recovery unit with an additional evaporator which serves exclusively to recover thermal energy from the waste air is required.

The above-mentioned object may also be achieved according to the invention by a method for heating a vehicle inner space using an above-described vehicle air conditioner which has a sensor for detecting an air humidity in the vehicle inner space and an electronic control unit which via the air humidity detected by the sensor can determine a window misting in the vehicle inner space, wherein a fresh air supply to the vehicle inner space is automatically and continuously adapted in accordance with the air humidity detected, wherein the fresh air supply is increased with an air humidity which is critical with respect to the window misting and is maintained or reduced with an air humidity which is non-critical with respect to the window misting. Such an automatic adaptation of the fresh air supply in accordance with the current air humidity enables particularly energy-efficient operation of the vehicle air conditioner in heating mode.

Other features and advantages of the invention will be appreciated from the following description of preferred embodiments with reference to the drawings, in which:
- Figure 1 is a schematic circuit diagram of the refrigerant circuit of a vehicle air conditioner according to the invention;
- Figures 2-7 present examples not covered by the scope of the invention;
- Figure 8 is a schematic cut-out of a vehicle air conditioner according to the invention in a heating mode;
- Figure 9 is another schematic cut-out of the vehicle air conditioner according to Figure 8 in the heating mode;
- Figure 10 is yet another schematic cut-out of the vehicle air conditioner according to Figure 8 in the heating mode;
- Figure 11 is a schematic cut-out of the vehicle air conditioner according to Figure 8 in a cooling mode; and
- Figure 12 is another schematic cut-out of the vehicle air conditioner according to Figure 8 in the cooling mode.

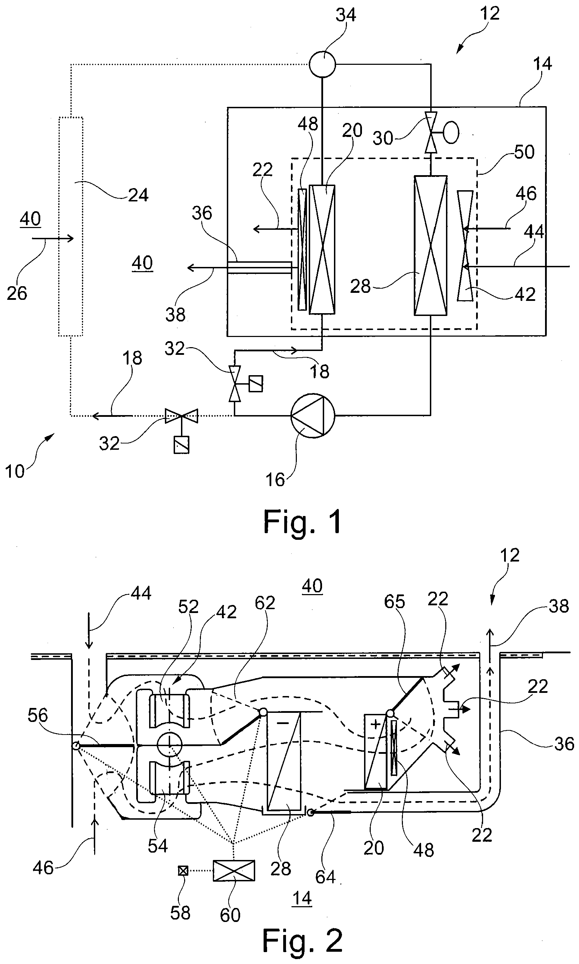

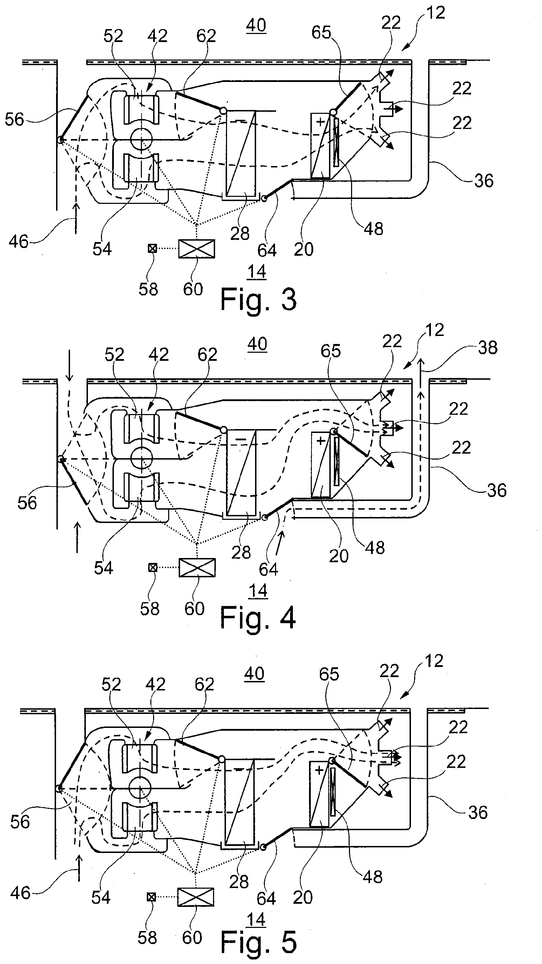

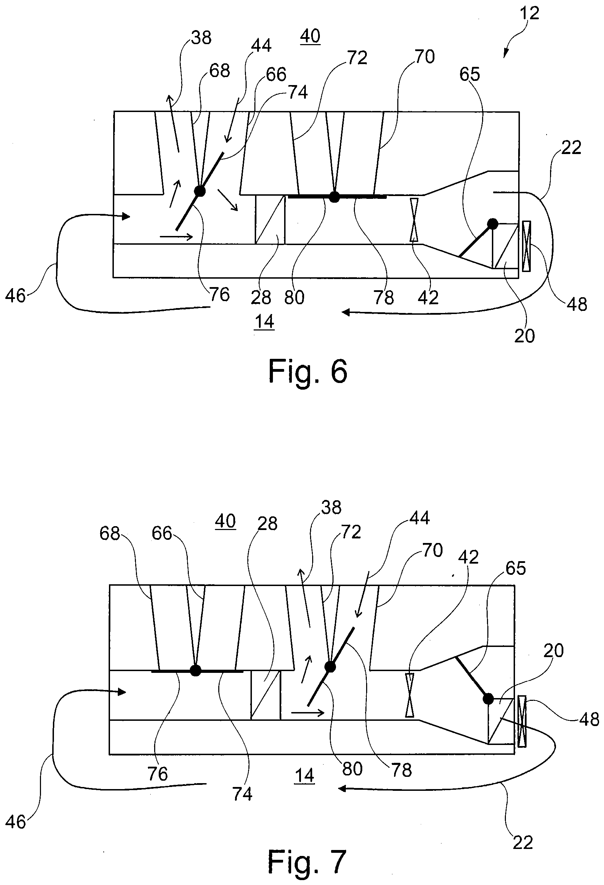

Embodiments of Fig. 2-7 do not fall within the scope of the claims.

Figure 1 schematically illustrates the general operating principle of a refrigerant circuit 10 of a vehicle air conditioner 12 for heating, ventilation and/or air-conditioning of a vehicle inner space 14.

The refrigerant circuit 10 comprises according to Figure 1 a compressor 16 for compressing a refrigerant 18, a first condenser 20 for cooling and condensing the refrigerant 18 from the compressor 16 and for heating air 22 which can be supplied to the vehicle inner space 14, a second condenser 24 which is connected in parallel with the first condenser 20 for cooling and condensing the refrigerant 18 from the compressor 16 and for heating vehicle surrounding air 26, an evaporator 28 for heating and evaporating the refrigerant 18 and for cooling air 22 which can be supplied from the vehicle inner space 14 and a pressure reduction unit 30 which is arranged upstream of the evaporator 28 for decompressing the refrigerant 18 from the first or second condenser 20, 24. The first condenser 20 is arranged in the vehicle inner space 14 and is therefore also referred to as the "inner condenser". The second condenser 24 is in contrast arranged in an engine compartment of the motor vehicle, that is to say, outside the vehicle inner space 14, and is therefore also referred to as the "outer condenser".

According to Figure 1, the refrigerant circuit 10 in a heating mode of the vehicle air conditioner 12 is illustrated with solid lines, wherein refrigerant 18 flows through the first condenser 20 and the second condenser 24 is bridged. In contrast, in a cooling mode of the vehicle air conditioner 12 which is illustrated with dashed lines, refrigerant 18 flows through the second condenser 24, whilst the first condenser 20 is bridged. In order to switch between the heating mode and the cooling mode of the vehicle air conditioner 12, there are provided by way of example according to Figure 1 two shut-off valves 32 which are in particular controlled in such a manner that either the first condenser 20 or the second condenser 24 is bridged.

The refrigerant circuit 10 also comprises according to Figure 1 a refrigerant store 34 which in the present embodiment is arranged at a high-pressure side of the refrigerant circuit 10. However, it is alternatively also conceivable for the refrigerant store 34 to be arranged at a low-pressure side of the refrigerant circuit 10.

As schematically illustrated in Figure 1, the vehicle air conditioner 12 has a waste air duct 36 which discharges waste air 38 from the vehicle inner space 14 into the vehicle environment 40, wherein the vehicle inner space 14 is preferably vented exclusively via this waste air duct 36 towards the vehicle environment 40. At the entrance of the waste air duct is located a waste air flap 64 to regulate the flow of waste air 38 passing through the waste air duct 36.In the heating mode of the vehicle air conditioner 12, at least a portion of the waste air 38 discharged via the waste air duct 36 flows through the evaporator 28, wherein it is particularly advantageous with respect to the energy recovery for all the waste air 38 discharged from the vehicle inner space 14 into the vehicle environment 40 to flow through the evaporator 28. During flow through the evaporator 28, there is removed from the waste air 38 thermal energy which via the refrigerant circuit 10 is in turn used to heat the air 22 supplied to the vehicle inner space 14. In heating mode, that is to say, during the thermal pump operation of the vehicle air conditioner 12, energy recovery and consequently an extremely energy-efficient operation of the vehicle air conditioner 12 is thereby enabled with little technical complexity. The entrance of the waste air ducts 36 are located downstream of the evaporator 28.

That is to say, the vehicle air conditioner 12 according to Figure 1 has precisely one evaporator 28 which is used both for cooling the air 22 which is supplied to the vehicle inner space 14 and for cooling the waste air 38, wherein the cooling of the waste air 38 is used for heat recovery in the heating mode of the vehicle air conditioner 12.

According to Figure 1, the vehicle air conditioner 12 comprises a blower 42 for conveying fresh air 44 and/or circulation air 46 which produces a predetermined air flow direction during blower operation. The evaporator 28 is in this instance arranged with reference to the air flow direction produced by the blower 42 upstream of the first condenser 20.

With respect to the air flow direction produced by the blower 42, downstream of the first condenser 20 an electrical heating device 48 is additionally provided in order to increase the heating power of the vehicle air conditioner 12 in the heating mode. This optional electrical heating device 48 which can be switched on as required is in a particularly preferred manner a PTC heating device generally known from the prior art.

Figures 2 to 5 show a cut-out 50 of the vehicle air conditioner 12 indicated in Figure 1 according to an example not being covered by the scope of the invention.

As illustrated in Figures 2 to 5 in examples shown for mere clarification of a method disclosed below, the vehicle air conditioner 12 further comprises a sensor 58 for detecting an air humidity in the vehicle inner space 14 and an electronic control unit 60 for controlling a fresh air supply to the vehicle inner space 14 in accordance with data detected by the sensor 58.

The electronic control unit 60 can ultimately determine via the air humidity detected by the sensor 58 a condensation of water on the vehicle windows, that is to say, a window misting in the vehicle inner space 14. In an advantageous method for heating the vehicle inner space 14 by means of the vehicle air conditioner 12 in the heating mode, the supply of fresh air 44 to the vehicle inner space 14 is adapted automatically and continuously in accordance with the air humidity detected, wherein the fresh air supply increases with an air humidity which is critical with respect to the window misting and is maintained or reduced with an air humidity which is non-critical with respect to the window misting.

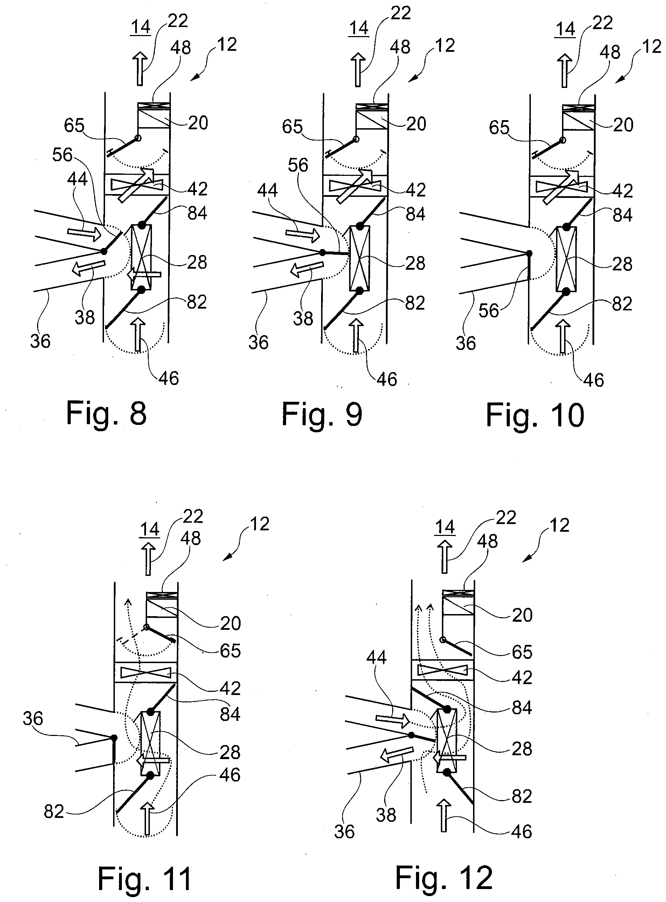

Figures 8 to 12 show the cut-out 50 of the vehicle air conditioner 12 indicated in Figure 1 according to the invention.

The blower 42 is located downstream of the condenser 28.

In this embodiment two evaporator flaps 82, 84 are provided to adjust an air flow direction inside the evaporator 28. In this instance, these evaporator flaps 82, 84 are controlled in such a manner that the evaporator 28 in the heating mode of the vehicle air conditioner 12 according to Figures 8 to 10 is flowed through in a first direction (from right to left) and at least in mixed air operation of the cooling mode of the vehicle air conditioner 12 according to Figure 12 in a second direction counter to the first direction (from left to right).

The vehicle air conditioner 12 which is operated in Figures 8 to 10 as a thermal pump is according to Figure 8 in "pure fresh air operation", according to Figure 9 is in mixed air operation and according to Figure 10 is in "pure circulation air operation".

In pure circulation air operation, fresh air 44 is exclusively supplied to the vehicle inner space 14. The waste air 38 which is guided from the vehicle inner space 14 via the waste air duct 36 into the vehicle environment 40 first flows through the evaporator 28 for energy recovery so that particularly energy-efficient fresh air operation is produced.

In mixed air operation, both fresh air 44 and circulation air 46 are supplied to the blower 42. After flowing through the evaporator 28, the "excess" circulation air 46 is directed as waste air 38 via the waste air duct 36 into the vehicle environment 40 so that energy recovery also takes place during mixed air operation.

During pure circulation air operation, there is no air exchange between the vehicle inner space 14 and the vehicle environment 40 so that there are no thermal energy losses produced at all. However, this pure circulation air operation is susceptible to window misting in the vehicle inner space 14.

According to Figures 11 and 12, the vehicle air conditioner 12 is in cooling mode, wherein Figure 11 illustrates a "pure circulation air operation" and Figure 12 illustrates a mixed air operation.

## Claims

1. Vehicle air conditioner for heating, ventilation and/or air-conditioning of a vehicle inner space (14), the vehicle air conditioner (12) having a first waste air duct (36) which discharges waste air (38) into a vehicle environment (40), the vehicle air conditioner (12) comprising an evaporator (28) for cooling air (22) wherein in the heating mode of the vehicle air conditioner (12) at least a portion of the waste air (38) which is discharged via the first waste air duct (36) flows through the evaporator (28),
**characterized in that** two evaporator flaps (82, 84) are provided for adjusting an air flow direction inside the evaporator (28).

2. Vehicle air conditioner according to Claim 1, **characterized in that** a sensor (58) for detecting an air humidity in the vehicle inner space (14) and an electronic control unit (60) for controlling a supply of fresh air to the vehicle inner space (14) in accordance with data detected by the sensor (58) are provided.

3. Vehicle air conditioner according to either of the preceding claims, **characterized in that** a blower (42) for conveying fresh air (44) and circulation air (46) is provided.

4. Vehicle air conditioner according to Claim 3, **characterized in that** a control flap (56) for adjusting a fresh air/circulation air or mixed air operation of the vehicle air conditioner (12) is provided, wherein the blower (42) in fresh air operation conveys fresh air (44), in circulation air operation it conveys circulation air (46) and in mixed air operation it conveys both fresh air (44) and circulation air (46).

5. Vehicle air conditioner according to any one of Claims 3 to 4, wherein Claim 3 depends on Claim 1 or 2, **characterized in that** the blower (42) is arranged downstream of the evaporator (28).

6. Vehicle air conditioner according to any one of Claims 3 to 5, wherein Claim 3 depends on Claim 2, comprising a first condenser (20) for heating air (22) **characterized in that** the evaporator (28) is arranged with respect to an air flow direction produced by the blower (42) upstream of the first condenser (20).

7. Method for heating a vehicle inner space (14) using a vehicle air conditioner (12) according to claim 2, wherein the sensor (58) is provided for detecting an air humidity in the vehicle inner space (14) and the electronic control unit (60) can determine a window misting in the vehicle inner space (14) via the air humidity detected by the sensor (58), and wherein a fresh air (44) supply to the vehicle inner space (14) is automatically and continuously adapted in accordance with the air humidity detected, wherein the fresh air (44) supply is increased with an air humidity which is critical with respect to the window misting and is maintained or reduced with an air humidity which is non-critical with respect to the window misting.

## Patentansprüche

1. Fahrzeugklimaanlage zur Heizung, Belüftung und/oder Klimatisierung eines Fahrzeuginnenraums (14), wobei die Fahrzeugklimaanlage (12) einen ersten Abluftkanal (36) aufweist, der Abluft (38) in eine Fahrzeugumgebung (40) ablässt,
wobei die Fahrzeugklimaanlage (12) einen Verdampfer (28) zum Kühlen von Luft (22) umfasst, wobei in dem Heizmodus der Fahrzeugklimaanlage (12) zumindest ein Teil der Abluft (38), die über den ersten Abluftkanal (36) abgelassen wird, durch den Verdampfer (28) fließt, **dadurch gekennzeichnet, dass** zwei Verdampferklappen (82, 84) zum Einstellen der Luftausstoßrichtung in dem Verdampfer (28) bereitgestellt sind.

2. Fahrzeugklimaanlage nach Anspruch 1, **dadurch gekennzeichnet, dass** ein Sensor (58) zum Detektieren einer Luftfeuchtigkeit in dem Fahrzeuginnenraum (14) und eine elektronische Steuereinheit (60) zum Steuern einer Zufuhr von Frischluft zu dem Fahrzeuginnenraum (14) gemäß durch den Sensor (58) detektierten Daten bereitgestellt sind.

3. Fahrzeugklimaanlage nach einem der vorausgehenden Ansprüche, **dadurch gekennzeichnet, dass** ein Gebläse (42) zum Befördern von Frischluft (44) und Umluft (46) bereitgestellt ist.

4. Fahrzeugklimaanlage nach Anspruch 3, **dadurch gekennzeichnet, dass** eine Steuerklappe (56) zum Einstellen eines Frischluft-/Umluft- oder Mischluftbetriebs der Fahrzeugklimaanlage (12) bereitgestellt ist, wobei das Gebläse (42) im Frischluftbetrieb Frischluft (44) befördert, es im Umluftbetrieb Umluft (46) befördert und es im Mischluftbetrieb sowohl Frischluft (44) als auch Umluft (46) befördert.

5. Fahrzeugklimaanlage nach einem der Ansprüche 3 bis 4, wobei Anspruch 3 von Anspruch 1 oder 2 abhängt, **dadurch gekennzeichnet, dass** das Gebläse (42) stromabwärts des Verdampfers (28) angeordnet ist.

6. Fahrzeugklimaanlage nach einem der Ansprüche 3 bis 5, wobei Anspruch 3 von Anspruch 2 abhängt, umfassend einen ersten Kondensator (20) zum Heizen von Luft (22), **dadurch gekennzeichnet, dass** der Verdampfer (28) in Bezug auf eine Luftausstoßrichtung, die durch das Gebläse (42) erzeugt wird, stromaufwärts des ersten Kondensators (20) angeordnet ist.

7. Verfahren zum Heizen eines Fahrzeuginnenraums (14) unter Verwendung einer Fahrzeugklimaanlage (12) nach Anspruch 2, wobei der Sensor (58) zum Detektieren einer Luftfeuchtigkeit in dem Fahrzeuginnenraum (14) bereitgestellt ist und die elektronische Steuereinheit (60) ein Beschlagen von Fenstern in dem Fahrzeuginnenraum (14) über die durch den Sensor (58) detektierte Luftfeuchtigkeit bestimmen kann, und wobei eine Zufuhr von Frischluft (44) zu dem Fahrzeuginnenraum (14) automatisch und fortlaufend gemäß der detektierten Luftfeuchtigkeit angepasst wird, wobei die Zufuhr von Frischluft (44) bei einer Luftfeuchtigkeit erhöht wird, die in Bezug auf das Beschlagen von Fenstern kritisch ist, und bei einer Luftfeuchtigkeit beibehalten oder reduziert wird, die in Bezug auf das Beschlagen von Fenstern nicht kritisch ist.

## Revendications

1. Climatiseur de véhicule pour le chauffage, la ventilation et/ou la climatisation d'un espace intérieur de véhicule (14), le climatiseur de véhicule (12) ayant une première conduite d'air vicié (36) qui évacue, dans un environnement de véhicule (40), de l'air vicié (38),
le climatiseur de véhicule (12) comprenant un évaporateur (28) pour refroidir de l'air (22), dans lequel, dans le mode de chauffage du climatiseur de véhicule (12), au moins une partie de l'air vicié (38), qui est évacué par l'intermédiaire de la première conduite d'air vicié (36), s'écoule à travers l'évaporateur (28),
**caractérisé en ce que** deux volets d'évaporateur (82, 84) sont prévus pour ajuster une direction d'écoulement d'air à l'intérieur de l'évaporateur (28).

2. Climatiseur de véhicule selon la revendication 1, **caractérisé en ce qu'**un capteur (58), pour détecter une humidité d'air dans l'espace intérieur de véhicule (14), et une unité de commande électronique (60), pour commander une alimentation en air frais à l'espace intérieur de véhicule (14) conformément à des données détectées par le capteur (58), sont prévus.

3. Climatiseur de véhicule selon l'une ou l'autre des revendications précédentes, **caractérisé en ce qu'**un ventilateur (42) pour amener de l'air frais (44) et de l'air de circulation (46) est prévu.

4. Climatiseur de véhicule selon la revendication 3, **caractérisé en ce qu'**un volet de commande (56) pour ajuster un fonctionnement à air frais/air de circulation ou à air mélangé du climatiseur de véhicule (12) est prévu, dans lequel le ventilateur (42), dans le fonctionnement à air frais, amène de l'air frais (44), dans le fonctionnement à air de circulation, il amène de l'air de circulation (46) et, dans le fonctionnement à air mélangé, il amène à la fois de l'air frais (44) et de l'air de circulation (46).

5. Climatiseur de véhicule selon l'une quelconque des revendications 3 à 4, dans lequel la revendication 3 dépend de la revendication 1 ou 2, **caractérisé en ce que** le ventilateur (42) est agencé en aval de l'évaporateur (28).

6. Climatiseur de véhicule selon l'une quelconque des revendications 3 à 5, dans lequel la revendication 3 dépend de la revendication 2, comprenant un premier condenseur (20) pour chauffer de l'air (22), **caractérisé en ce que** l'évaporateur (28) est agencé par rapport à une direction d'écoulement d'air produite par le ventilateur (42) en amont du premier condenseur (20).

7. Procédé pour chauffer un espace intérieur de véhicule (14) en utilisant un climatiseur de véhicule (12) selon la revendication 2, dans lequel le capteur (58) est prévu pour détecter une humidité d'air dans l'espace intérieur de véhicule (14) et l'unité de commande électronique (60) peut déterminer une formation de buée sur vitre dans l'espace intérieur de véhicule (14) par l'intermédiaire de l'humidité d'air détectée par le capteur (58), et dans lequel une alimentation en air frais (44) à l'espace intérieur de véhicule (14) est adaptée automatiquement et en continu conformément à l'humidité d'air détectée, dans lequel l'alimentation en air frais (44) est augmentée avec une humidité d'air qui est essentielle en ce qui concerne la formation de buée sur vitre et est maintenue ou réduite avec une humidité d'air qui n'est pas essentielle en ce qui concerne la formation de buée sur vitre.
